# EUROPEAN PATENT SPECIFICATION

(11) **EP 2 801 005 B1**
(45) Date of publication and mention of the grant of the patent: **09.08.2017**
(21) Application number: 12737949.3
(22) Date of filing: 29.06.2012
(51) Int. Cl.: G05B 23/02, G05B 19/042

(54) **METHOD AND APPARATUS FOR NETWORK-BASED TESTING**
VERFAHREN UND VORRICHTUNG FÜR NETZWERKBASIERTE PRÜFUNG
PROCÉDÉ ET APPAREIL POUR EFFECTUER DES TESTS PAR RÉSEAU

(30) Priority: 06.01.2012 US 201261583956 P
(43) Date of publication of application: 12.11.2014
(73) Proprietor: GE Intelligent Platforms, Inc., Charlottesville, VA 22911 (US)
(72) Inventor: DICKIE, Kenneth, Pierson, Edmonton, AB T6R 0G4 (CA)
(74) Representative: Fischer, Jens Peter
(86) International application number: PCT/US2012/044766
(87) International publication number: WO 2013/103381

(56) References cited:
- EP-A2- 2 040 135
- US-A- 5 530 643
- US-A1- 2007 005 266

## Description

### Cross References to Related Applications

This application claims priority to U.S. US2015/160642 filed on January 6, 2012.
PCT International application WO 2013/103382 entitled "Apparatus and Method for Creating and Presenting Control Logic" naming inventor Bernardo Anger and having attorney docket number 256211;
PCT International application WO 2013/103380 entitled "Apparatus and Method for Synchronization of Control Logic" naming as inventor Kenneth Dickie and having attorney docket number 256214; and
PCT International application WO 2013/103383 entitled "Apparatus and Method for Third Party Creation of Control Logic" naming as inventor Kenneth Dickie and having attorney docket number 256213;
are being filed on the same date as the present application.

### Background of the Invention

### Field of the Invention

The subject matter disclosed herein generally relates to the testing of control logic, and more specifically, to the testing of control logic from a communication network.

### Brief Description of the Related Art

Automated devices perform various functions and these devices typically include a controller or control device that controls or manages the execution of these functions. For example, robotic controllers (e.g., those that utilize microprocessors) often control the functions of a robot and the robot can perform various manufacturing tasks. Assembly line controllers are used to control the various functions performed on or at an assembly line. A consumer device controller may be used to control the operation and functioning of any type of consumer device (e.g., building security system, building lighting system, or building heating system). Together, these types of controllers provide automated functions and are generally referred to as automation controllers.

An automation controller typically includes and utilizes control logic to perform its functions. Control logic may include computer software and/or computer hardware that performs various predetermined functions. For example, an assembly line controller (e.g., for a bottling plant) may include a microprocessor that operates programmed computer software to regulate the speed and other functions associated with operating an assembly line that fills and caps the bottles. In another example, a controller may also include a microprocessor running programmed computer software that regulates various device parameters (e.g., temperature, pressure, or operating speed). In yet another example, a water system controller may include control logic that controls pumps and sprinklers.

Testing of control logic is performed to ensure that the control logic functions are performed properly. If the control logic is not functioning properly, then the automation controller will often malfunction thereby causing various problems for a user. Conventional testing approaches rely upon direct testing the control logic at the automation controller itself. That is, service personnel have to physically visit the site of the automation controller to personally write the tests that determined whether the control logic of the automation controller was functioning properly. As a result, the testing of control logic is expensive, time-consuming and otherwise burdensome resulting in general user dissatisfaction with these known approaches.

EP2040135 teaches providing for automated electronic validation of industrial process code for an industrial control environment. By way of example, components of a system that facilitate such validation can include a monitoring component that tracks execution of code in an industrial control, and a storage component that receives a result of the execution of the code and stores the result in memory. Each line or logical element of code can be analyzed in this manner to determine a percentage of code that executes successfully and a percentage that does not. Additionally, results of physical outputs driven by the industrial code can be input into a system and correlated with the execution results.

### Brief description of the Invention

The present invention provides a method and apparatus for testing control logic according to claims 1 and 6. In many of the embodiments, an automation controller is tested, and the testing is performed at a communication network, for example, at the Internet as well as manually on hardware. A representation or model of control logic is received and stored. This control logic representation represents control logic that resides on and operates an automatic controller. In this respect, the representation describes the functionality, workings, and operation of the control logic. The automation controller is disposed remotely from and communicates with the communication network. Based upon the received representation of the control logic (as a series of blocks), a test procedure is automatically generated. The test procedure is effective to test each individual representation (e.g., block) of the control logic as will as to test the entire representation (e.g., all the blocks connected together are tested for operation, functionality, syntax or any other feature of the control logic).

The test procedure is applied to the representation of the control logic to create a simulation of the whole operation of the control logic. The simulation is conducted simultaneously and in parallel with the operation of the automation controller. At least one result of the simulation is evaluated and an appropriate action may be taken.

In other aspects, based upon the results of the simulation, a determination is made as to at least one user to receive a notice. The notification is sent only to the selected user or users.

In yet other aspects, an apparatus for testing control logic includes an interface and a processor. The apparatus resides at a communication network.

The interface has an input and an output. The input is configured to receive a representation of control logic that resides on an automation controller. The automation controller is disposed remotely from a memory within the communication network.

The processor is coupled to the memory and to the interface. The processor is configured to store the representation of the control logic in the memory and is further configured to, based upon each received level of representation of the control logic (e.g., each control logic block when the control logic is organized as a series of interconnected blocks), to automatically generate a test procedure. The test procedure is effective to test the representation of the control logic and create a mapping. As used herein, "mapping" refers to connecting a series of individual control logic blocks to provide one or more individual functions. In a mapping, known inputs are applied to the mapping and mapped to outputs by the interconnected blocks in the mapping. The processor is further configured to apply the test procedure to the control logic to create a simulation of the operation of the control logic and the simulation is conducted simultaneously and in parallel with the operation of the automation controller. The processor is further configured to evaluate at least one result of the test and present the evaluation at the output.

### Brief description of the Drawings

For a more complete understanding of the disclosure, reference should be made to the following detailed description and accompanying drawings wherein:
FIG. 1 comprises a block diagram of a communication network with testing according to various embodiments of the present invention;
FIG. 2 comprises a flow chart showing testing approaches according to various embodiments of the present invention;
FIG. 3 comprises a block diagram of a test procedure according to various embodiments of the present invention;
FIG. 4 comprises a block diagram of one example of testing according to various embodiments of the present invention;
FIG. 5 comprises a block diagram of a network controller according to various embodiments of the present invention;
FIG. 6 comprises a block diagram of an automation controller according to various embodiments of the present invention;
FIG. 7 comprises a diagram of one example of a notification approach according to various embodiments of the present invention;
FIG. 8 comprises a flow chart of one example of a notification approach according to various embodiments of the present invention;
FIG. 9 comprises a block diagram of one example of a control logic block according to various embodiments of the present invention;
FIG. 10 comprises a block diagram of one example of a control logic mapping according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### Detailed Description of the Invention

A platform at a communication network is provided for the testing of control logic. The platform may be one or more hardware devices operating computer software (e.g., a microprocessor at a server operating software). Tests are performed of control logic (e.g., organized as a series of connected blocks) at the platform to determine whether, for instance, each block of the control logic is functioning properly. Layers or levels of individual blocks are tested and then the overall series of interconnected blocks is tested. By testing a representation of the control logic at the communication network, the remotely-located automation controller does not have to be disabled and the technical effect is that this allows for the more efficient and cost effective operation of the automation controller. Additionally, targeted notifications or alerts can be sent to users or customers informing them, for example, of potential risks or dangers when the testing reveals shortcomings with the control logic.

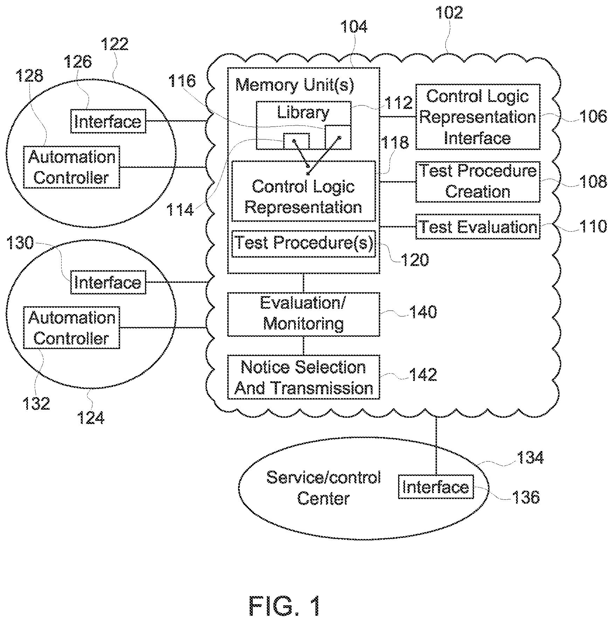

Referring now to FIG. 1, one example of a system for testing control logic is described. A communication network 102 includes a memory unit 104, a control logic representation interface 106, a test procedure creation module 108, and a test evaluation module 110.

The communication network 102 is coupled to a first site 122, a second site 124, and a service control center 134. The first site 122 includes a first interface 126 and a first automation controller 128. The second site 124 includes a second interface 130 and a second automation controller 132. The service control center 134 includes a third interface 136. The first site 122 and the second site 124 are physical locations of automation controllers and may be, for example, factories, consumer devices, offices, buildings, homes, power plants, communication sites (e.g., base stations) or any other suitable location that may utilize controllers. The service control center 134 may be a physical location that has various interfaces where service personnel can issue instructions or monitor events.

The communication network 102 may be any type of communication network or combination of communication networks. For example, the communication network 102 may be the Internet, a cloud network, a telecommunication (e.g., cellular) network or any combination of these or other networks.

The memory unit 104 is any type of memory device or combination of memory devices. The memory unit 104 as well as the other elements of the communication network 102 may physically reside on any type of device or devices such as servers, access points, computers, interfaces of any type, or any other type of network element.

The communication network 102 also may include an evaluation and monitoring module 140 and a notice selection and transmission module 142. The evaluation and monitoring module 140 monitors the results of the test simulations and/or the state of the control logic. Based upon this monitoring and evaluation, the notice selection and transmission module 142 selectively determines recipients of messages or notices. In one example, the evaluation and monitoring module 140 monitors tests for operational status. When a problem exists, the module 142 determines identities of the recipients to be informed of the test results. To take one specific example, testing may indicate that a certain piece or portion of control logic is faulty. The module 142 may be configured to determine all customers that have the same or similar control logic. After a customer list is determined, notices may be sent (e.g., via email) to those customers indicating a potential problem with their control logic exists. The notice is targeted to the correct customers and a "blast" notice is not used. Consequently, the present approaches provide/ensure that unaffected customers are not unduly alarmed, while the affected customers can take corrective or other appropriate action.

The memory unit 104 includes a central repository 112 (with central repository elements or modules 114 and 116), a control logic representation 118, and one or more test procedures 120. The control logic representation 118 is a description (in one example, implemented as programmed computer software or code) that represents the control logic at the first automation controller 128 and/or the second automation controller 132. The control logic representation 118 describes the blocks, functions, workings, operation, inputs, outputs, and other characteristics of the operation of the associated automation controller 128 or 132. In this respect, the control logic used in the automation controller 128 or 132 and the representation 118 may be any combination of hardware and/or software elements.

The control logic representation 118 utilizes modules 114 and 116 from the central repository 112. The control logic representation 118 may be organized as a series of interconnected blocks in one example. In this respect, the modules 114 and 116 may be programmed software modules that perform specified functions. Although only two modules 114 and 116 are shown, it will be appreciated that any number of modules may be used. Further, it will be understood that different control logic representations may utilize (share) modules. As mentioned, the central repository 112 includes modules 114 and 116. Alternatively, a third party can create the entire control logic 118 (without the modules 114 and 116). In other aspects, a third party can create pieces of different types of logic (e.g., the same type of control logic for different automation controllers or different types of control logic for the same automation controller).

Test procedures 120 are the test procedures used to test the operation, state, and/or condition of the control logic representation 118. In this respect, test procedures 120 may test (or otherwise check) the operation of the control logic representation 118. For example, a particular group of inputs may be applied to the control logic representation 118, the control logic representation 118 may react to these inputs, and then the outputs of the control logic representation 118 determined. In this way, it may be determined if the expected outputs are created. In other words, it may be determined if the control logic is functioning properly in each individual block as well as at a higher level when several blocks are linked.

Control logic representation interface 106 receives control logic from interfaces 126 or 130. Test procedure creation module 108 generates the test procedure 120 at the communication network 102 and instigates tests. Test evaluation module 110 evaluates the results of the testing.

Automation controllers 128 and 132 may be any device, combination of devices, or network of devices that are implemented in any combination of hardware or software. In one example, the automation controllers 128 and 132 are assembly line controllers. In another example, the automation controllers 128 and 132 are controllers that manage the operation of different aspects of a pumping network (e.g., pumps, valves, pipes, sprinklers, and their associated controllers). Other examples of automation controllers and systems that utilize automation controllers are possible.

The interfaces 126, 130 and 136 are any type of interface or HMI device such as a personal computer, laptop, cellular telephone, or personal digital assistant. Other examples are possible.

In one example of the operation of the system of FIG. 1, the control logic representation 118 is received by the control logic representation interface 106 and stored in the memory unit 104. This control logic representation 118 represents control logic that resides and operates one of the automation controllers 128 or 132 and the automation controllers 128 or 132 are disposed remotely from and communicates with the communication network 102.

Based upon the received representation of the control logic 118, a test procedure 120 is automatically generated by the test procedure creation module 108. The test procedure 120 is effective to test the control logic representation 118.

The test procedure 120 is applied to the control logic representation 118 to create a simulation of the operation of the control logic representation 118. The test procedure may include individual tests for each individual block and then an overall test procedure for the linked-together control logic (of the linked together blocks). The simulation is conducted simultaneously and in parallel with the operation of the automation controllers 128 or 132. In parallel execution represents being executed at the same time as opposed to serial execution, where test procedures are executed one after the other. At least one result of the simulation is evaluated by test evaluation module 110 and an appropriate action may be taken, for example, informing the service control center 134.

As mentioned, the evaluation and monitoring module 140 monitors the testing simulation and its results. When a problem exists, the module 142 determines recipients to be informed of the test results. To take one specific example, testing may indicate that certain control logic is faulty in both automation controllers 128 and 132. The module 142 may determine the identities of both customers that own or operate controllers 128 and 132. A notice is sent by any convenient approach (e.g., email) to these customers indicating a potential problem with their control logic exists. As will be appreciated, the notice is targeted only to the correct customers and a "blast" notice to all potential customers is not used. Consequently, the technical affect is that unaffected customers (or others such as those at the service center 136) are not unduly alarmed, while the affected customers can take corrective or other appropriate action.

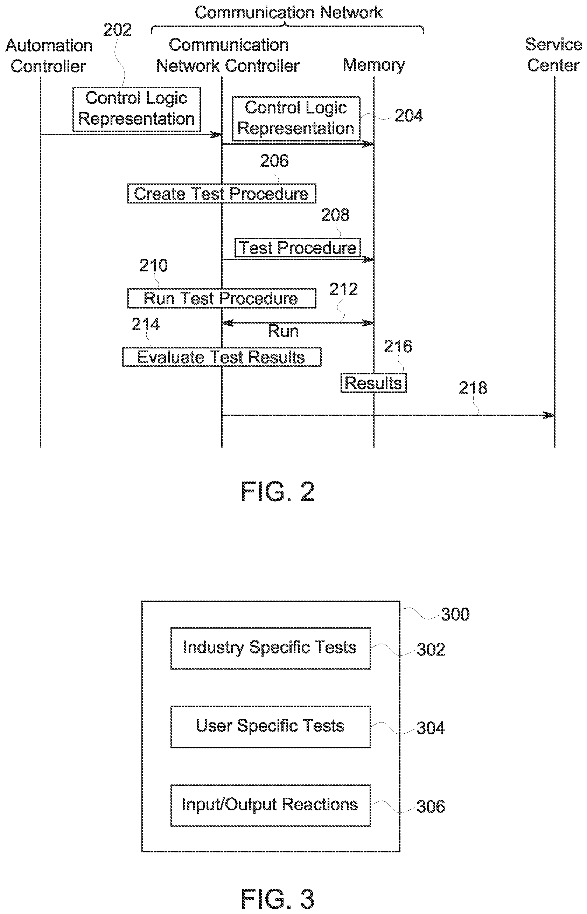

Referring now to FIG. 2, one example of testing control logic deployed at a communication network is now described. At step 202, a control logic representation is transmitted from the automation controller (or an interface associated with the automation controller) and a communication network controller. The communication network controller includes hardware and/or software for routines to receive the control logic representation, create test procedures, run test procedures, and evaluate test results. In some aspects, the test code may be pre-written for each block, but the overall test procedure or suite is custom and automatically configured for multiple-interconnected blocks of the control logic. This may be accomplished by linking the individual test procedures. Thus, a custom test can be created according to the needs of individual customers.

At step 204, the control logic representation is stored in memory at the communication network. At step 206, a test procedure is created automatically and stored at the communication network. At step 208, the test procedure is stored in memory. At steps 210 the test procedure is executed by the communication network controller that receives the procedure from memory at step 212. As mentioned, the test procedure may itself include an individual test for each block, but the overall test procedure or suite is custom and automatically configured for multiple-interconnected blocks of the control logic by linking the individual test procedures.

At step 214, the results of the tests are evaluated at the communication network. For example, it may be determined if the results fit or meet predetermined criteria. At step 218, results 216 are sent to a service center such as that maintained by a manufacturer or other service provider.

Referring now to FIG. 3, one example of a test procedure 300 is described. The test procedure 300 includes an industry specific test module 302, a user-specific test module 304, and an input/output reactions module 306.

The industry specific test module 302 performs tests or test procedures that are common or specific to a particular industry. For example, industry-wide tests may be performed to determine whether the control logic is syntactically correct, whether the control logic includes logic to execute certain, industry-required functions, or whether certain parameters associated with the control logic are within the proper industry-set ranges.

The user-specific test module 304 performs tests that are specific to a particular user. For example, a particular user may require that certain parameters within the control logic have been set to specific values.

The input/output reactions module 306 takes a given set of inputs, applies it to the control logic, and obtains the outputs. The values of the outputs can be compared to predetermined thresholds or ranges to determine if the test has been passed, for example, by a manual check.

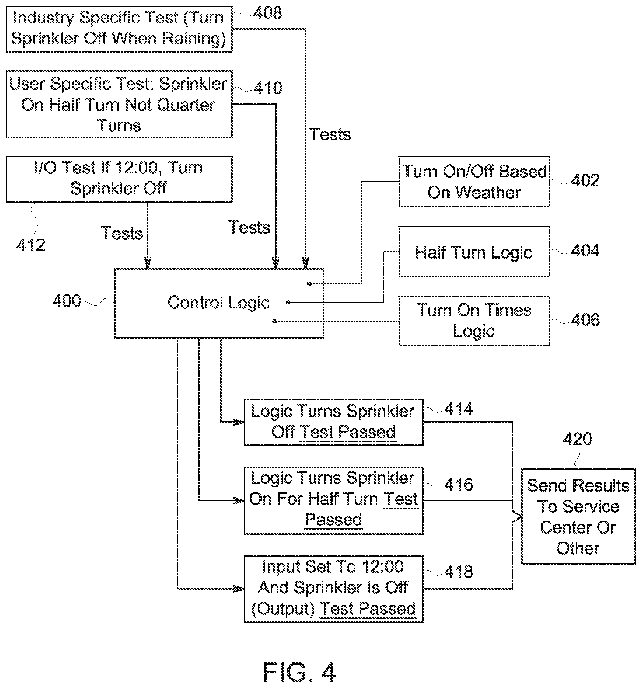

Referring now to FIG. 4, one example of testing of control logic is described. This example relates to control logic for a sprinkler controller. In the example of FIG. 4, control logic 400 utilizes three central repository routines. A first central repository routine 402 turns a sprinkler on or off based upon the weather conditions. A second routine (half turn logic) 404 turns the sprinkler on and off based upon the location of the sprinkler head within a turn (in this example, the sprinkler has a water spraying head that rotates). The third routine (turn-on-times logic) 406 turns the sprinkler on and off based upon time of day. These individual routines can be considered blocks that are logically linked together.

Industry specific test module 408 performs industry specific tests (e.g., determining whether the sprinkler is off when it is raining). User specific test module 410 performs user specific tests such as testing that the sprinkler is on for half turns, not quarter turns. Input/output test module 412 tests whether the sprinkler is on or off at certain times of the day (e.g., the sprinkler is off at 12:00 noon). It will be understood that the tests described with respect to FIG. 4 are only examples of the types of tests that can be accomplished. Other applications are possible and fall within the scope of the present approaches.

The tests are then executed to see if the control logic functions properly. The following describes one example of execution of the tests where all the tests 408, 410, and 412 happen to pass. It will be appreciated, however, that other outcomes and results are possible.

At step 414, central repository routine 402 is caused to be executed by the industry specific test module 408, the central repository routine's execution turns the sprinkle off when the weather is raining and the test passes. At step 416, the user specific test module 410 causes execution of the half-turn logic 404, which turns the sprinkler off for half turns and the test is passed. At step 418, the I/O test module 412 sets the input of control logic 400 to 12:00, logic 406 is executed, and the sprinkler is off. The test is passed. At step 420, the above-mentioned results are sent to the service center.

It will be appreciated that the test module 408, 410, and 412 test the blocks 402, 404, and 406 of the control logic. The test modules 408, 410, and 412 can be linked together to form an overall test. Further, the number and type of test modules used can be varied to customize the test for different users.

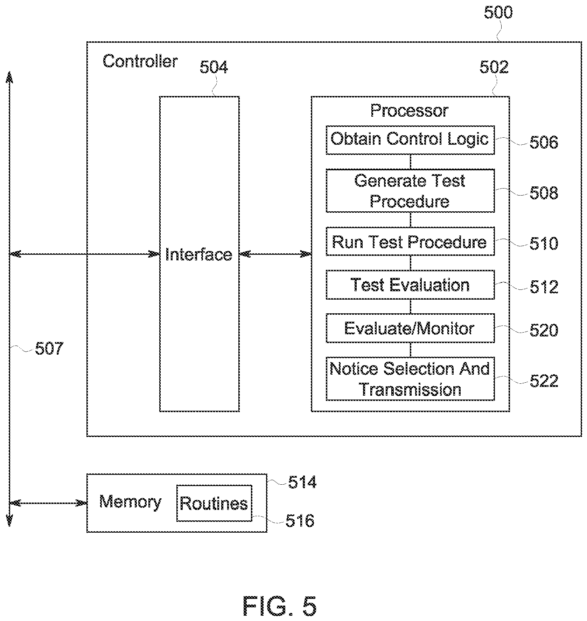

Referring now to FIG. 5, one example of a communication network controller 500 is described. The controller 500 includes a processor 502 and interface 504. The processor 502 includes an obtain control logic module 506, a generate test procedure module 508, a run test procedure module 510, a test evaluation module 512, an evaluation and monitoring module 520, and a notice selection and transmission module 522. The interface 504 is coupled to communication medium 507. Communication medium 507 is coupled to a memory 514 that includes test routines 516.

The obtain control logic module 506 obtains a representation of control logic. That actual control logic that operates the automation controller resides at the automation controller but for testing purposes the representation is maintained at the communication network. In this way, operation of the automation controller can proceed simultaneously and in parallel with the actual testing.

The generate test procedure module 508 generates the test routines 516. As mentioned, the test routines may include industry tests, user-specific tests, or input-output tests. The test routines may be implemented as any combination of hardware and/or software. The run test procedure 510 executes the test routines 516. The test evaluation module 512 evaluates the test results.

The communication medium 507 may be any type of communication medium (hard wires, over the air, or the Internet to mention a few examples). The interface 504 provides formatting and control functions between the processor 502 and the communication medium 507. The processor 502 is any processing device such as a microprocessor or the like. The communication network controller 500 may be disposed at or within any device such as an access point, server, or base station, to mention a few examples.

The evaluation and monitoring module 520 monitors tests and their results. When a problem exists, the notice selection and transmission module 522 determines recipients to be informed of the test results. To take one specific example, testing may indicate that certain control logic is faulty. The module 522 may determine all customers that have the same or similar control logic. After a customer list is determined, notices may be sent to those customers via medium 507 indicating a potential problem with their control logic exists. The notice is targeted to the correct customers and a "blast" notice to all customers is not sent. Consequently, unaffected customers are not unduly alarmed, while the affected customers can take corrective or other appropriate action.

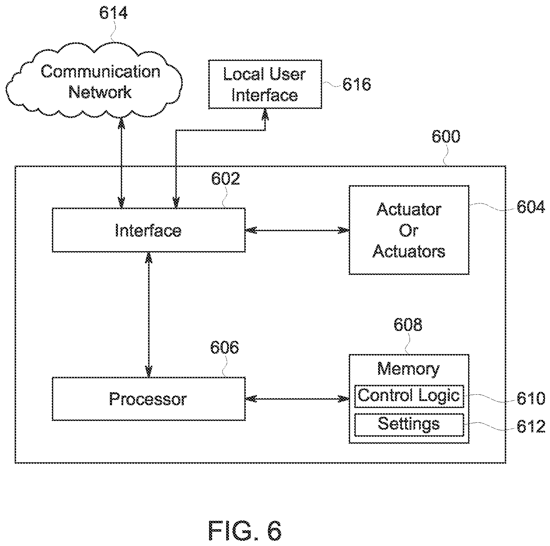

Referring now to FIG. 6, one example of an automation controller 600 is described. The automation controller 600 includes an interface 602, an actuator or actuators 604, a processor 606, a memory 608 (that includes control logic 610 and settings 612).

The interface 602 facilitates communications between the automation controller 600 and a communication network 614, and between the automation controller 600 and a local user interface 616. In this respect, the interface 602 includes hardware and/or software that interprets or translates commands and/or other information between the communication network 614 and the automation controller 600, and between the automation controller 600 and the local user interface 616.

The actuators 604 actuate physical or logical devices (e.g., the mechanical components of a valve or a sprinkler motor, to mention two examples). The function of the actuators 604 is to physically implement one or more of the functions associated with or provided by the controller 600.

The processor 606 is any programmed logic device such as a microprocessor or the like. Control logic 610 implements control functions that control actuators 604. Settings 612 are settings or other parameters (e.g., valve levels, pressures, temperatures, speeds) for the actuators 604.

Local user interface 616 may be a personal computer, cellular phone, or any other device that communicates with network 614 and/or controller 600. The communication network 614 is the location where the control logic 610 is built.

In one example of the operation of the system of FIG. 6, tests are performed utilizing a representation of the control logic 610 at the communication network 614. Notifications of the results of the tests may be received at the local user interface 616 indicating that a problem exists with the control logic 610.

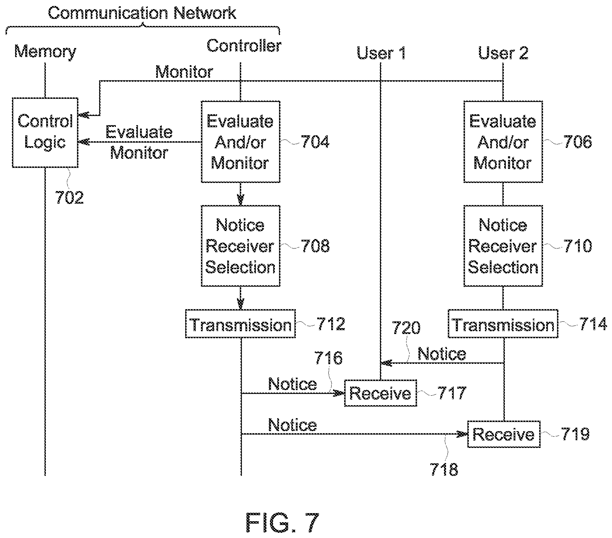

Referring now to FIG. 7, one example of an approach for creating notifications is described. Control logic 702 is stored at a memory at a communication network. Two users (user 1 and user 2) may have associated automation controllers. The control logic 702 is tested. A first evaluation and monitoring module 704 (at a controller at the communication network) monitors the tests (and also whether the control logic has been altered). A second evaluation and monitoring module 706 at the second user also monitors the tests (and also whether the control logic has been altered).

A first notice receiver selection module 708 at the communication network controller determines a first list of recipients for notifications based upon the results of the tests. A second notice receiver selection module 710 at the second user determines a second list of recipients for notifications based upon the results of the tests. The first and second lists may be the same or different. In this exemplary case, the lists are different. In other aspects, certain tests results where the same control logic fails for different reasons may be communicated to certain groups of users. For instance, if control logic fails for a first reason, notifications may be sent to a first group of users while if the same control logic fails for a second reason, notifications may be sent to a second group of users.

The communication network controller utilizes a transmission module 712 to transmit a notice 716 to the first user and the second user and this is received at step 717. The second user utilizes a transmission module 714 to send a notification 720 also to the first user. The communication network controller utilizes the transmission module 712 to transmit a notice 718 to the first user and the second user and this is received at step 719.

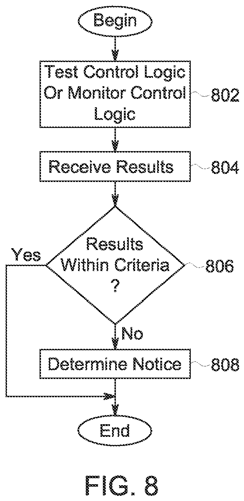

Referring now to FIG. 8, an example of an approach for sending notifications based upon monitoring or test results of control logic is described. At step 802, the control logic may be tested or monitored. In the latter case, the control logic may be monitored to see if changes have been made to the control logic. This step is performed at the communication network.

At step 804, the results of the testing or monitoring are received. At step 806, it is determined whether the results match predetermined criteria. For example, it may be determined if the testing has indicated that the control logic has failed. In another example, it may be determined if the control logic has been changed.

If the answer is affirmative, execution ends. If the answer is negative, then at step 808 a notification is determined or created. In this step, a list of receivers of the notification is determined. For instance, all customers who use all or portions of the control logic may be determined. The technical effect is that notification is created and transmitted to the affected customers without transmitting the notification to unaffected customers.

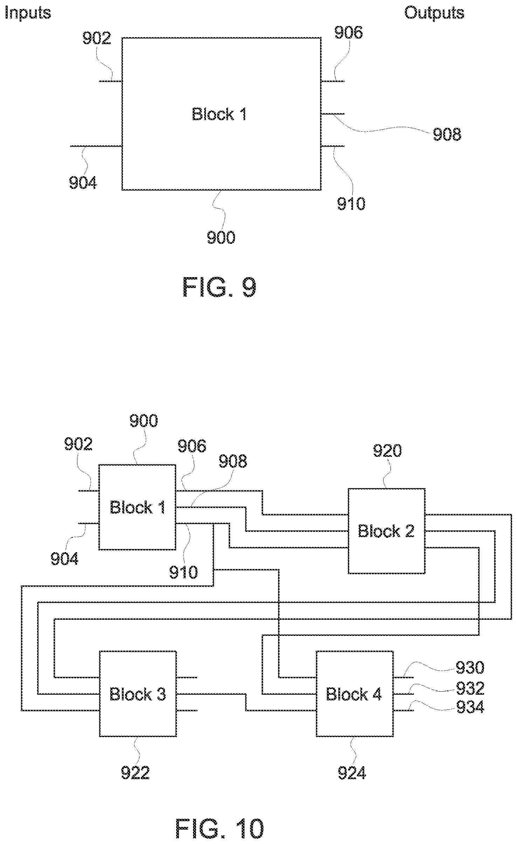

Referring now to FIG. 9, one example of an individual control logic block 900 is described. The control logic block 900 receives inputs 902 (for temperature) and 904 (for pressure). Control logic (e.g., computer hardware and/or software instructions) create an output 906 (a control signal for a light action or response), 908 (a control signal for a pump action or response), and 910 (a control signal for a heater action or response).

Referring now to FIG. 10, one example of an overall solution mapping is described. It can be seen that control logic block 900 has been connected to blocks 920, 922, and 924. In FIG. 10, the inputs 902 and 904 now produce and the overall system outputs at 930, 932, and 934. Sets of test instructions can be written for each of the blocks 900, 920, 922, and 924. The blocks 900, 920, 922, and 924 can be tested individually. Then, an overall test suite can be constructed by linking all the individual tests (for each of the individual blocks 900, 920, 922, and 924). The individual tests and overall test suite can be performed at the network or downloaded to the actual automation controller. In this way, customized test suites can be created for individual customers (by selecting certain tests) and each customer need not be concerned with each individual test since the overall test suite is configured to meet a particular customer's requirements.

It will be understood that the approaches described herein also offer the ability of testing performance. In this respect, different types of hardware and/or software are emulated on the communication network and tested as to how the control logic is working (i.e., the performance of the control logic) as well as if the logic is working at all.

This functionality gives users the ability to identify problems with the control logic at an early point in time. To take one specific example, a delay on a plant floor (e.g., a two second delay) that could lead to worker injury or death could be identified and appropriate personnel notified.

To take another specific example, users can be notified when a programmed logic controller (PLC) they are running is almost (or at) over-capacity. Previously, users would identify performance issues and then try to remedy the situation by simply purchasing hardware to try and fix the problem. In contrast, the present approaches allow users to determine exactly what hardware they need ahead of the purchase that will fit their system and meet their needs. Previously, buyers might purchase a unit, get the unit up and running only to find the performance of the unit is still too slow. Or, they may purchase a unit, discover they do not need all the power and/or capacity of the unit, and find they have overspent on capacity they did not really need for the performance improvement they desire. As mentioned, the present approaches solve this problem by testing the performance of a unit a user has a potential desire to acquire.

Preferred embodiments of this invention are described herein, including the best mode known to the inventors for carrying out the invention. It should be understood that the illustrated embodiments are exemplary only, and should not be taken as limiting the scope of the invention.

As used herein, an element or function recited in the singular and
proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Although specific features of the invention are shown in some drawings and not in others, this is for convenience only as each feature may be combined with any or all of the other features in accordance with the invention. The words "including", "comprising", "having", and "with" as used herein are to be interpreted broadly and comprehensively and are not limited to any physical interconnection. Moreover, any embodiments disclosed in the subject application are not to be taken as the only possible embodiments. Other embodiments will occur to those skilled in the art and are within the scope of the following claims.

## Claims

1. A method of testing control logic that resides on and operates an automation controller, the method being performed at a communication network (102), the automation controller being disposed remotely from and communicating with the communication network, the method comprising:
receiving (202, 204) at the communications network a representation of the control logic from the automation controller and storing the representation of the control logic at the communications network ;
based upon the received representation of the control logic, automatically generating (206) a test procedure at the communications network, the test procedure being effective to test the representation of the control logic;
applying (210) the test procedure to the representation of the control logic at the communications network to create a simulation of the operation of the control logic, the simulation being conducted simultaneously and in parallel with the normal operation of the automation controller;
evaluating (214) at least one result of the simulation at the communications network;
determining (142) identities of recipients who are operating a version of the control logic that is the same or similar to the representation of the control logic at the communications network to be informed of the test results;
sending (142) a notice to the identified recipients indicating a potential problem with their control logic exists; and
transmitting (218) the at least one result to a service center.

2. The method of claim 1 wherein the control logic comprises individual blocks interconnected together.

3. The method of claim 1 wherein receiving the representation of the control logic comprises receiving the representation of the control logic from a user via a graphical user interface, and wherein the representation of the control logic describes a plurality of control elements and the interaction between selected ones of the plurality of control elements.

4. The method of claim 1 wherein:
the controller is selected from the group consisting of: a robot controller, an assembly line controller, and a consumer device controller, or
the automation controller is selected from the group consisting of: an emulated controller and a physical controller.

5. The method of claim 1 wherein the testing comprises testing according to one approach selected from the group consisting of: an industry-specific test, a user-specific test, and an input/output test.

6. An apparatus for testing control logic, the apparatus residing at a communication network (102), the apparatus comprising:
an interface (126, 130) having an input and an output, the input configured to receive a representation of control logic that resides on an automation controller (128, 132) at the communications network, the automation controller (128, 132) being disposed remotely from a memory (104) within the communication network (102);
a processor (108, 110, 140), the processor coupled to the memory (104) and to the interface (126, 130), the processor configured to store the representation of the control logic from the automation controller in the memory, the processor further configured to, based upon the received representation of the control logic, automatically generate a test procedure (120) at the communications network, the test procedure (120) being effective to test the representation of the control logic at the communications network, the processor being further configured to apply the test procedure (120) to the representation of the control logic to create a simulation of the operation of the control logic, the simulation being conducted simultaneously and in parallel with the normal operation of the automation controller (128, 132), the processor being further configured to evaluate at least result of the test at the communications network and present the evaluation at the output; the processor being further configured to determine (142) identities of recipients who are operating a version of the control logic that is the same or similar to the representation of the control logic at the communications network to be informed of the test results; and to send (142) a notice to the identified recipients indicating a potential problem with their control logic exists, and to transmit the at least one result to a service center at the output.

7. The apparatus of claim 6 wherein the control logic comprises individual blocks interconnected together.

8. The apparatus of claim 6 wherein the representation of the control logic is received at the interface from a user via a graphical user interface, and wherein the representation of the control logic describes a plurality of control elements and the interaction between selected ones of the plurality of control elements.

9. The apparatus of claim 6 wherein the controller is selected from the group consisting of: a robot controller, an assembly line controller, and a consumer device controller.

10. The apparatus of claim 6 wherein the automation controller (128, 132) is selected from the group consisting of: an emulated controller and a physical controller.

11. The apparatus of claim 6 wherein the test procedure (120) tests at least one of test industry specific tests, user specific tests, or input/output tests.

## Patentansprüche

1. Verfahren zum Testen einer Steuerlogik, die sich in einer Automatisierungssteuereinrichtung befindet und diese betreibt, wobei das Verfahren in einem Kommunikationsnetz (102) durchgeführt wird, wobei die Automatisierungssteuereinrichtung fern von dem Kommunikationsnetz angeordnet ist und mit diesem kommuniziert, wobei das Verfahren Folgendes umfasst:
Empfangen (202, 204) einer Darstellung der Steuerlogik von der Automatisierungssteuereinrichtung in dem Kommunikationsnetz und Speichern der Darstellung der Steuerlogik in dem Kommunikationsnetz;
automatisches Erzeugen (206) eines Testverfahrens in dem Kommunikationsnetz basierend auf der empfangenen Darstellung der Steuerlogik, wobei das Testverfahren in der Lage ist, die Darstellung der Steuerlogik zu testen;
Anwenden (210) des Testverfahrens auf die Darstellung der Steuerlogik in dem Kommunikationsnetz, um eine Simulation des Betriebs der Steuerlogik zu erstellen, wobei die Simulation zeitgleich und parallel mit dem Normalbetrieb der Automatisierungssteuerung durchgeführt wird;
Bewerten (214) mindestens eines Ergebnisses der Simulation in dem Kommunikationsnetz;
Bestimmen (142) von Identitäten von Empfängern, die eine Version der Steuerlogik betreiben, die gleich oder ähnlich der Darstellung der Steuerlogik in dem Kommunikationsnetz ist, um über die Testergebnisse informiert zu werden;
Senden (142) einer Nachricht an die identifizierten Empfänger, die anzeigt, dass ein mögliches Problem mit ihrer Steuerlogik besteht; und
Übertragen (218) des mindestens einen Ergebnisses an ein Dienstleistungszentrum.

2. Verfahren nach Anspruch 1, wobei die Steuerlogik einzelne Blöcke umfasst, die miteinander verbunden sind.

3. Verfahren nach Anspruch 1, wobei das Empfangen der Darstellung der Steuerlogik das Empfangen der Darstellung der Steuerlogik von einem Anwender über eine graphische Anwenderschnittstelle umfasst und wobei die Darstellung der Steuerlogik mehrere Steuerelemente und das Zusammenwirken zwischen ausgewählten Steuerelementen der mehreren Steuerelemente beschreibt.

4. Verfahren nach Anspruch 1, wobei:
die Steuereinrichtung aus der Gruppe ausgewählt ist, die aus Folgendem besteht: einer Roboter-Steuereinrichtung, einer Montagelinie-Steuereinrichtung und einer Verbrauchervorrichtung-Steuereinrichtung, oder
die Steuereinrichtung aus der Gruppe ausgewählt ist, die aus Folgendem besteht: einer emulierten Steuereinrichtung oder einer physikalischen Steuereinrichtung.

5. Verfahren nach Anspruch 1, wobei das Testen das Testen nach einem Ansatz, der aus der Gruppe ausgewählt ist, die aus Folgendem besteht, umfasst: einem branchenspezifischen Test, einem anwenderspezifischen Test und einem Eingabe/Ausgabe-Test.

6. Vorrichtung zum Testen einer Steuerlogik, wobei sich die Vorrichtung in einem Kommunikationsnetz (102) befindet und wobei die Vorrichtung Folgendes umfasst:
eine Schnittstelle (126, 130), die einen Eingang und einen Ausgang aufweist, wobei der Eingang konfiguriert ist, eine Darstellung der Steuerlogik, die sich in einer Automatisierungssteuereinrichtung (128, 132) in dem Kommunikationsnetz befindet, zu empfangen, wobei die Automatisierungssteuereinrichtung (128, 132) fern von einem Speicher (104) in dem Kommunikationsnetz (102) angeordnet ist;
einen Prozessor (108, 110, 140), wobei der Prozessor an den Speicher (104) und an die Schnittstelle (126, 130) gekoppelt ist, wobei der Prozessor konfiguriert ist, die Darstellung der Steuerlogik von der Automatisierungssteuereinrichtung in dem Speicher zu speichern, wobei der Prozessor ferner konfiguriert ist, basierend auf der empfangenen Darstellung der Steuerlogik, automatisch ein Testverfahren (120) in dem Kommunikationsnetz zu erzeugen, wobei das Testverfahren (120) in der Lage ist, die Darstellung der Steuerlogik in dem Kommunikationsnetz zu testen, wobei der Prozessor ferner konfiguriert ist, das Testverfahren (120) auf die Darstellung der Steuerlogik anzuwenden, um eine Simulation des Betriebs der Steuerlogik zu erstellen, wobei die Steuerlogik zeitgleich und parallel mit dem Normalbetrieb der Automatisierungssteuereinrichtung (128, 132) durchgeführt wird, wobei der Prozessor ferner konfiguriert ist, mindestens ein Ergebnis des Tests in dem Kommunikationsnetz zu bewerten und die Bewertung am Ausgang darzustellen; wobei der Prozessor ferner konfiguriert ist, Identitäten der Empfänger zu bestimmen (142), die eine Version der Steuerlogik betreiben, die gleich oder ähnlich der Darstellung der Steuerlogik in dem Kommunikationsnetz ist, um sie über die Testergebnisse zu informieren und um eine Nachricht zu den identifizierten Empfängern zu senden (142), die anzeigt, dass ein mögliches Problem mit ihrer Steuerlogik besteht, und um das mindestens eine Ergebnis an dem Ausgang an ein Dienstleistungszentrum zu übertragen.

7. Vorrichtung nach Anspruch 6, wobei die Steuerlogik einzelne Blöcke umfasst, die miteinander verbunden sind.

8. Vorrichtung nach Anspruch 6, wobei die Darstellung der Steuerlogik von einem Anwender über eine graphische Anwenderschnittstelle an der Schnittstelle empfangen wird, und wobei die Darstellung der Steuerlogik mehrere Steuerelemente und das Zusammenwirken zwischen den ausgewählten Steuerelementen der mehreren Steuerelemente beschreibt.

9. Vorrichtung nach Anspruch 6, wobei die Steuereinrichtung aus der Gruppe ausgewählt ist, die aus Folgendem besteht: einer Roboter-Steuereinrichtung, einer Montagelinien-Steuereinrichtung und einer Verbrauchervorrichtung-Steuereinrichtung.

10. Vorrichtung nach Anspruch 6, wobei die Automatisierungssteuereinrichtung (128, 132) aus der Gruppe ausgewählt ist, die aus Folgendem besteht: einer emulierten Steuereinrichtung oder einer physikalischen Steuereinrichtung.

11. Vorrichtung nach Anspruch 6, wobei das Testverfahren (120) branchenspezifische Tests, anwenderspezifische Tests und Eingabe/Ausgabe-Tests testet.

## Revendications

1. Procédé de test d'une logique de commande qui réside sur, et exploite, un contrôleur d'automatisation, le procédé étant exécuté au niveau d'un réseau de communication (102), le contrôleur d'automatisation étant disposé à distance du, et en communication avec, le réseau de communication, le procédé comprenant les étapes suivantes :
recevoir (202, 204), au niveau du réseau de communication, une représentation de la logique de commande depuis le contrôleur d'automatisation et stocker la représentation de la logique de commande au niveau du réseau de communication ;
sur la base de la représentation reçue de la logique de commande, générer automatiquement (206) une procédure de test au niveau du réseau de communication, la procédure de test étant effective pour tester la représentation de la logique de commande ;
appliquer (210) la procédure de test à la représentation de la logique de commande au niveau du réseau de communication pour créer une simulation du fonctionnement de la logique de commande, la simulation étant conduite simultanément et parallèlement au fonctionnement normal du contrôleur d'automatisation ;
évaluer (214) au moins un résultat de la simulation au niveau du réseau de communication ;
déterminer (142) des identités de personnes concernées qui exploitent une version de la logique de commande qui est identique ou similaire à la représentation de la logique de commande au niveau du réseau de communication pour les informer des résultats de test ;
envoyer (142) une notification aux personnes concernées identifiées indiquant qu'il existe un problème potentiel avec leur logique de commande ; et
transmettre (218) l'au moins un résultat à un centre de service.

2. Procédé selon la revendication 1, dans lequel la logique de commande comprend des blocs individuels interconnectés ensemble.

3. Procédé selon la revendication 1, dans lequel recevoir la représentation de la logique de commande comprend de recevoir la représentation de la logique de commande depuis un utilisateur par l'intermédiaire d'une interface utilisateur graphique, et où la représentation de la logique de commande décrit une pluralité d'éléments de commande et l'interaction entre les éléments sélectionnés de la pluralité d'éléments de commande.

4. Procédé selon la revendication 1, dans lequel :
le contrôleur est sélectionné dans le groupe constitué par : un contrôleur de robot, un contrôleur de ligne d'assemblage et un contrôleur d'appareil grand public, ou
le contrôleur d'automatisation est sélectionné dans le groupe constitué par : un contrôleur émulé et un contrôleur physique.

5. Procédé selon la revendication 1, dans lequel le test comprend un test selon une approche sélectionnée dans le groupe constitué d'un test spécifique à l'industrie, d'un test spécifique à l'utilisateur, et d'un test d'entrée/sortie.

6. Appareil pour tester une logique de commande de test, l'appareil résidant au niveau d'un réseau de communication (102), l'appareil comprenant :
une interface (126, 130) ayant une entrée et une sortie, l'entrée étant configurée pour recevoir une représentation de logique de commande qui réside sur un contrôleur d'automatisation (128, 132) au niveau du réseau de communication, le contrôleur d'automatisation (128, 132) étant disposé à distance d'une mémoire (104) au sein du réseau de communication (102) ;
un processeur (108, 110, 140), le processeur étant couplé à la mémoire (104) et à l'interface (126, 130), le processeur étant configuré pour stocker la représentation de la logique de commande à partir du contrôleur d'automatisation dans la mémoire, le processeur étant en outre configuré pour, sur la base de la représentation reçue de la logique de commande, générer automatiquement une procédure de test (120) au niveau du réseau de communication, la procédure de test (120) étant effective pour tester la représentation de la logique de commande au niveau du réseau de communication, le processeur étant en outre configuré pour appliquer la procédure de test (120) à la représentation de la logique de commande pour créer une simulation du fonctionnement de la logique de commande, la simulation étant conduite simultanément et parallèlement au fonctionnement normal du contrôleur d'automatisation (128, 132), le processeur étant en outre configuré pour évaluer au moins le résultat du test au niveau du réseau de communication et présenter l'évaluation à la sortie ; le processeur étant en outre configuré pour déterminer (142) des identités de personnes concernées qui exploitent une version de la logique de commande qui est identique ou similaire à la représentation de la logique de commande au niveau du réseau de communication pour les informer des résultats de test ; et pour envoyer (142) une notification aux personnes concernées identifiées indiquant qu'il existe un problème potentiel avec leur logique de commande, et pour transmettre l'au moins un résultat à un centre de service à la sortie.

7. Appareil selon la revendication 6, dans lequel la logique de commande comprend des blocs individuels interconnectés ensemble.

8. Appareil selon la revendication 6, dans lequel la représentation de la logique de commande est reçue au niveau de l'interface depuis un utilisateur par l'intermédiaire d'une interface utilisateur graphique, et où la représentation de la logique de commande décrit une pluralité d'éléments de commande et l'interaction entre les éléments sélectionnés parmi la pluralité d'éléments de commande.

9. Appareil selon la revendication 6, dans lequel le contrôleur « est sélectionné dans le groupe constitué par : un contrôleur de robot, un contrôleur de ligne d'assemblage et un contrôleur d'appareil grand public.

10. Appareil selon la revendication 6, dans lequel le contrôleur d'automatisation (128, 132) est sélectionné dans le groupe constitué par : un contrôleur émulé et un contrôleur physique.

11. Appareil selon la revendication 6, dans lequel la procédure de test (120) teste au moins un test parmi des tests spécifiques à l'industrie, des tests spécifiques à l'utilisateur et des tests d'entrée/sortie.
